## Europäisches Patentamt
## European Patent Office
## Office européen des brevets

(19)

(11) Veröffentlichungsnummer: **0 192 830**
**B1**

(12) # EUROPÄISCHE PATENTSCHRIFT

(45) Veröffentlichungstag der Patentschrift:
**08.06.88**

(51) Int. Cl.⁴: **B 60 T 17/08**

(21) Anmeldenummer: **85115294.2**

(22) Anmeldetag: **02.12.85**

(54) **Mechanische Lösevorrichtung für Federspeicherbremszylinder.**

(30) Priorität: **21.02.85 DE 3506024**

(43) Veröffentlichungstag der Anmeldung:
**03.09.86 Patentblatt 86/36**

(45) Bekanntmachung des Hinweises auf die Patenterteilung:
**08.06.88 Patentblatt 88/23**

(84) Benannte Vertragsstaaten:
**DE FR GB SE**

(56) Entgegenhaltungen:
**DE-A-2 344 691**
**DE-A-2 359 967**
**DE-B-2 646 158**

(73) Patentinhaber: **KNORR- BREMSE AG, Moosacher Strasse 80 Postfach 401060, D-8000 München 40 (DE)**

(72) Erfinder: **Kerscher, Albert, Frühlingstrasse 39, D-8057 Eching (DE)**

LIBER, STOCKHOLM 1988

**Beschreibung**

Die Erfindung betrifft eine mechanische Lösevorrichtung für Federspeicherbremszylinder, insbesondere von Schienenfahrzeugen, dessen durch Druckmittelbeaufschlagung in eine Lösestellung bringbarer Federspeicherkolben bei Ausfall des Lösedruckes mittels eines Schraubspindeltriebes zur Lösestellung bewegbar ist, wobei ein erstes Schraubelement des Schraubspindeltriebes willkürlich drehbar ist und mit einem zweiten Schraubelement verschraubt ist, welches undrehbar, gehalten ist, wobei zwischen einem Schraubelement des Schraubspindeltriebes und dem Federspeicherkolben mittel- oder unmittelbar eine in Bewegungsrichtung des letzteren zur Lösestellung wirksame Anschlagkupplung vorgesehen ist, wobei der Federspeicherkolben unter Druckmittelbeaufschlagung um einen zusätzlichen, ein Lösen der Anschlagkupplung bewirkenden Schalthub in Richtung Lösestellung in eine Löseendstellung weiter bewegbar ist als mittels des Schraubspindeltriebes, und wobei wenigstens ein Federelement vorgesehen ist, welches bei in Löseendstellung befindlichem Federspeicherkolben das der Anschlagkupplung zugeordnete Schraubelement elastisch in Verschraubrichtung entgegen der Richtung zur Lösestellung belastet.

Derartige Lösevorrichtungen sind aus den DE-C-2 344 691 und DE-C-2 359 967 bekannt. Als elastische Federelemente sind hierbei Schraubenfedern vorgesehen, welche das zweite Schraubelement axial belasten; das Gewinde zwischen den beiden Schraubelementen muß daher nichtselbsthemmend und entsprechend steil ausgebildet sein. Zur Kraftübersetzung und aus sonstigen Funktionsgründen benötigen diese Lösevorrichtungen zusätzlich einen Schneckenantrieb.

Im weiteren weisen diese bekannten Lösevorrichtungen die Merkmale auf, daß das erste Schraubelement drehbar und höchstens um einen Schalthub axial verschiebbar am Zylindergehäuse gelagert ist, daß das zweite Schraubelement axial verschieblich ist und undrehbar am Federspeicherkolben vorgesehen ist, und daß die Schraubenfeder das erste Schraubelement in Drehrichtung zum Verschrauben des zweiten Schraubelementes entgegen der Richtung zur Lösestellung belastet. Der Gesamtaufbau der Lösevorrichung ist vielteilig, kompliziert und raumaufwendig.

Weiterhin sind bereits Lösevorrichtungen bekannt, welche eine mit dem Zylindergehäuseboden verschraubte Gewindespindel aufweisen, deren federspeicherkolbenseitiges Ende ein Anschlagteil trägt; das Anschlagteil schlägt beim Herausschrauben der Gewindespindel am Federspeicherkolben an und nimmt diesen unter Spannen der Speicherfeder mit.

Der Erfindung liegt die Aufgabe zugrunde, eine Lösevorrichtung der eingangs angegebenen Art derart auszugestalten, daß sie die Mängel der bekannten Lösevorrichtungen vermeidet, insbesondere einen einfachen, platzsparenden Aufbau aus nur wenigen Teilen erfordert. Dabei soll zugleich der Vorteil der bekannten Lösevorrichtungen erhalten bleiben, daß nach einem mechanischen Lösevorgang mechanisch ein Wiedereinbremsen erfolgen kann und daß nach einem mechanischen Lösevorgang bei nachfolgender Druckmittelbeaufschlagung des Federspeicherkolbens die mechanische Lösevorrichtung selbsttätig in ihre den Federspeicherkolben unbeeinflußt lassende Ruhestellung zurückkehrt.

Diese Aufgabe wird nach der Erfindung bei einer mechanischen Lösevorrichtung der eingangs erwähnten Art durch die im kennzeichnenden Teil des Anspruchs 1 angegebenen Merkmale gelöst. Mit der Erfindung kann somit auf weitere Kraftüberverzichtet werden.

Den Unteransprüchen sind nach der weiteren Erfindung vorteilhafte Ausgestaltungsmöglichkeiten für die Lösevorrichtung entnehmbar. Bei der Ausbildung nach Unteranspruch 3 ergibt sich dabei eine auch für nachträgliche Umrüstungen vorhandener Federspeicherbremszylinder vorteilhafte Ausführungsform.

In den Zeichnungen sind vier unterschiedliche Ausführungsbeispiele für Lösevorrichtungen nach der Erfindung dargestellt, wobei

Fig. 1 ein Schnittbild fur eine erste Lösevorrichtung mit selbsthemmender Verschraubung der Schraubelemente

Fig. 2 einen Teilschnitt durch eine ähnliche, zweite Lösevorrichtung für sowohl selbsthemmende wie nichtselbsthemmende Verschraubung der Schraubelemente und

Fig. 3 und 4 entsprechend Schnittbilder durch eine dritte und eine dieser ähnliche, vierte Lösevorrichtung zeigen.

Einander entsprechende Teile sind in den Figuren mit gleichen Bezugszahlen versehen.

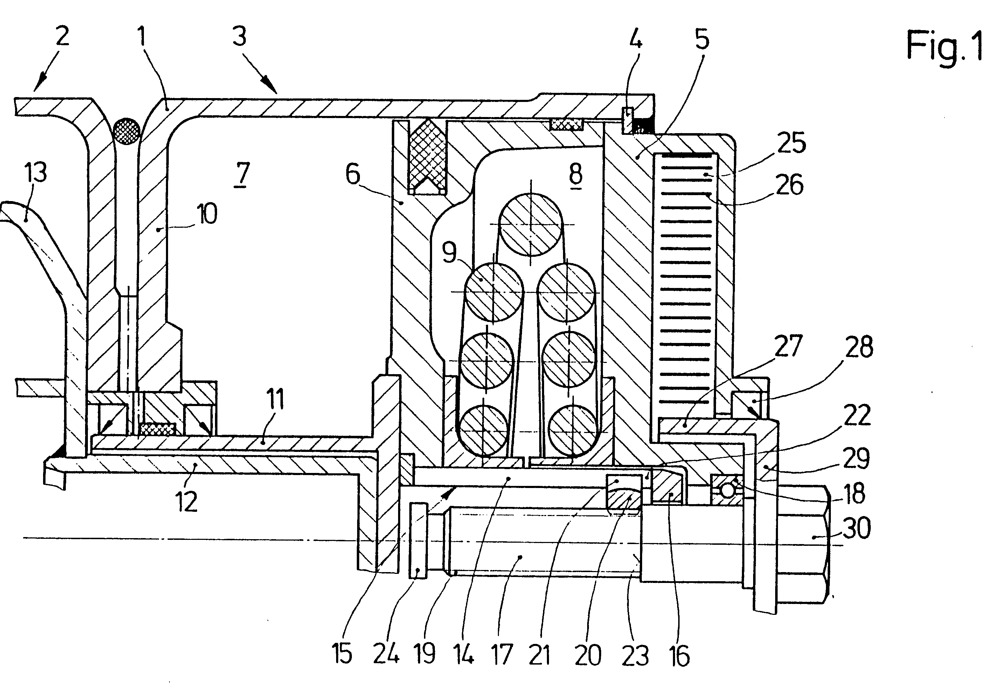

Fig. 1 zeigt das Zylindergehäuse 1 eines Kombizylinders beispielsweise gemäß dem Gebrauchsmuster DE-U-7 628 542 mit einem nur teilweise dargestellten Betriebsbremszylinder 2 und einem Federspeicherbremszylinder 3. Seitens des Federspeicherbremszylinders 3 ist das Zylindergehäuse 1 mittels eines durch einen Sicherungsring 4 lösbar und durch nicht gezeigte, übliche Mittel undrehbar gehaltenen Zylindergehäusebodens 5 verschlossen. Im Zylindergehäuse 1 ist verschieblich ein Federspeicherkolben 6 gelagert, der einerseits einen Beaufschlagungsraum 7 begrenzt und andererseits von der Kraft einer in einem entlüfteten Raum 8 befindlichen Speicherfeder 9 belastet ist. Der Federspeicherkolben 6 trägt ein den Beaufschlagungsraum 7 durchragendes und abgedichtet in einer Gehäusezwischenwand 10 verschieblich gelagertes Kolbenrohr 11 und ist mit einem in das Kolbenrohr 11 eingreifenden Stößelansatz 12 des nur teilweise dargestellten Betriebsbremskolbens 13 kuppelbar. Seitens des Raumes 8 trägt der Federspeicherkolben 6 ein mit einem Längsschlitz 14 versehenes Kolbenrohr 15, welches mit einem einem Innenflansch ähnlichem Anschlagteil 16 endet. In das Kolbenrohr 15 greift eine ein erstes Verschraubungsteil darstellende Gewindespindel 17 ein, welche über ein Wälzlager 18 drehbar, aber zumindest in Richtung zum Federspeicherkolben 6 unverschieblich am Zylindergehäuseboden 5 gelagert ist. Auf der Gewindespindel 17 ist mittels eines Gewindes 19 eine Mutter 20 verschraubt, welche im Kolbenrohr 15 axial verschieblich geführt ist, durch Eingreifen eines radial auskragenden Ansatzes 21 in den Längsschlitz 14 jedoch undrehbar gehalten ist. Die Mutter 20 bildet zusammen mit dem federspeicherkolbenabseitig angeordneten Anschlagteil 16 eine Anschlagkupplung 22, welche in der Löseendstellung des Federspeicherkolbens 6, wie sie in Fig. 1 dargestellt und durch Beaufschlagung des Federspeicherkolbens 6 mit einem Lösedruck im Beaufschlagungsraum 7 erreichbar ist, ein geringes, aus Fig. 1 ersichtliches Öffnungsspiel aufweist. Die Mutter 20 befindet sich dabei in ihrer zylindergehäusebodenseitigen Schraubendlage auf der Gewindespindel 17, welche durch eine Schulter 23 auf der Gewindespindel 17 bestimmt ist. Federspeicherkolbenseitig endet die Gewindespindel 17 mit einem lösbar befestigten Flansch 24, welcher ein ungewolltes Abschrauben der Mutter 20 von der Gewindespindel 17 ausschließt. Im Zylindergehäuseboden 5 befindet sich ein ringscheibenartiger Hohlraum 25, welcher sich bis nahe zum Außenumfang des Zylindergehäusebodens 5 erstreckt und in welchem eine als Drehfeder dienende Trieb- oder Spiralfeder 26 angeordnet ist. Der Ausdruck "Triebfeder" bezeichnet ein im entspannten Zustand höchstens schwach gekrümmtes Federblatt, das beim Spannen spiralig aufgewunden wird, während der Ausdruck "Spiralfeder" ein auch im entspannten Zustand spiralig gewundenes Federblatt bezeichnet; im weiteren wird für beide Federarten nur das Wort "Spiralfeder" benutzt. Das äußere Ende der Spiralfeder 26 ist am Zylindergehäuseboden 5 und das innere Ende an einem Zylinderteil 27 befestigt. Das Zylinderteil 27 ragt mittels eines Dichtringes 28 abgedichtet drehbar aus dem Hohlraum 25 ins Freie und ist über einen Flanschabschnitt 29 drehfest mit der Gewindespindel 17 verbunden. Im Anschluß an den Flanschabschnitt 29 endet die Gewindespindel 17 mit einem Sechskantkopf 30.

Das Gewinde 19 ist bei der Ausführung nach Fig. 1 selbsthemmend ausgebildet.

Im durch Druckmittelbeaufschlagung des Beaufschlagungsraumes 7 mit einem Lösedruck in Lösestellung gehaltenem Federspeicherbremszylinder 3 nehmen dessen Teile im wesentlichen die aus Fig. 1 ersichtlichen Lagen ein, lediglich die Mutter 20 befindet sich abweichend zur Darstellung in der linken Endlage nahe des Flansches 24 auf der Gewindespindel 17. Zum Einbremsen wird die Druckbeaufschlagung des Beaufschlagungsraumes 7 abgesenkt, so daß die Speicherfeder 9 den Federspeicherkolben 6 gemäß Fig. 1 nach links verschieben kann, wobei über den Stößelansatz 12 die nicht dargestellte Bremse betätigt wird. Das Kolbenrohr 15 gleitet dabei über die die Mutter 20, wobei jedoch auch bei maximaler Bremsung das Anschlagteil 16 nicht zur Anlage an der Mutter 20 gelangt. Beim nachfolgenden Lösen kehrt unter steigender Druckbeaufschlagung des Beaufschlagungsraumes 7 der Federspeicherkolben 6 in seine dargestellte Lage zurück.

Wird, ausgehend vom eingebremsten Zustand des Federspeicherbremszylinders 3, die mechanische Lösevorrichtung betätigt, um den Federspeicherbremszylinder 3 ohne Beaufschlagung des Beaufschlagungsraumes 7 mit einem Lösedruck in die Lösestellung zu verbringen, so ist mittels des Sechskantkopfes 30 nach Ansetzen eines geeigneten Werkzeuges die Gewindespindel 17 derart zu drehen, daß sich die im Längsschlitz 14 undrehbar geführte Mutter 20 auf der Gewindespindel 17 nach rechts verschraubt. Die Mutter 20 kommt dabei unter Schließen der Anschlußkupplung 22 alsbald zur Anlage am Anschlagteil 16 und nimmt über dieses sowie das Kolbenrohr 15 den Federspeicherkolben 6 unter Kompression der Federspeicher 9 mit. Die Bremsen werden während dieses Verschraubens der Mutter 20 gelöst, bis beim Beendigen der Verschraubung, dem Anschlagen der Mutter 20 an der Schulter 23, der volle Lösezustand erreicht ist. Abweichend zu Fig. 1 ist hierbei die Anschlagkupplung 22 noch geschlossen. Während des Verschraubungsvorganges wird durch das Drehen des Zylinderteiles 27 mit der Gewindespindel 17 die Spiralfeder 26 gespannt. Im erreichten Bremsenlösezustand ist die Speicherfeder 9 über den Federspeicherkolben 6, das Kolbenrohr 15, die geschlossene Anschlagkupplung 22, die Mutter 20, das Gewinde 19, die Gewindespindel 17 und das Wälzlager 18 gegen den Zylindergehäuseboden 5 abgestützt, durch welchen der Kraftfluß geschlossen wird. Das selbsthemmende Gewinde 19 hält unter seiner hohen, durch die Kraft der Speicherfeder 9 bewirkten Verspannung und damit Reibung die Gewindespindel 17 auch nach einer Freigabe des Sechskantkopfes 30 entgegen dem auf sie einwirkenden, von der Spiralfeder 26 stammenden Drehmoment sicher dreh fest.

Durch Rückdrehen der Gewindespindel 17 vermittels des am Sechskantkopf 30 anzusetzenden Werkzeuges kann nachfolgend ein willkürliches, mechanisches Wiedereinbremsen sowie nachfolgend wiederum ein erneutes, mechanisches Lösen erfolgen.

Ausgehend vom durch Betätigen der mechanischen Lösevorrichtung erreichten Lösezustand wird bei nachfolgender Druckbeaufschlagung des Beaufschlagungsraumes 7 mit einem Lösedruck der Federspeicherkolben 6 um einen geringen Hubweg weiter gemäß Fig. 1 nach rechts gedrückt, wobei sich die Anschlagkupplung 22 um einen geringen Hubweg öffnet: diese Stellung ist in Fig. 1 dargestellt. Durch Öffnen der Anschlagkupplung 22 wird das Gewinde 19 im Verschraubungsbereich zwischen der Mutter 20 und der Gewindespindel 27 von der Kraft der Speicherfeder 9 entlastet, so daß die Gewindereibung sinkt. Das von der Spiralfeder 26 auf die Gewindespindel 17 ausgeübte Drehmoment reicht nunmehr aus, die Gewindespindel 17 derart zu drehen, daß sich die Mutter 20 zum Flansch 24 hin verschraubt. Die mechanische Lösevorrichtung gelangt hierdurch bei Wiederkehr der Beaufschlagung des Beaufschlagungsraumes 7 selbsttätig in ihre Ruhestellung zurück, in welcher sie ein unbehindertes Einbremsen vermittels des Federspeicherbremszylinders durch Druckabsenkung des Beaufschlagungsraumes 7 ermöglicht.

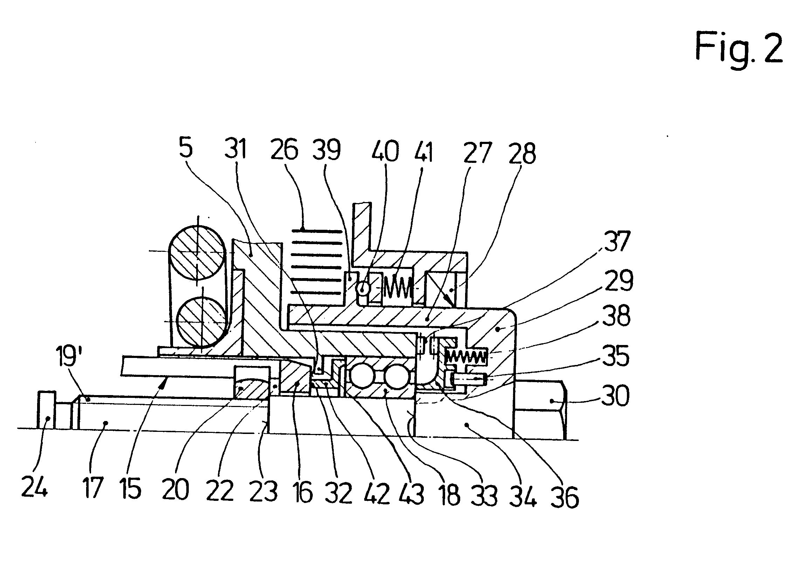

Bei der Ausführungsform der Lösevorrichtung nach Fig. 2 weist das Anschlagteil 16 auf seiner der Mutter 20 abgewandten Seite eine Anschlagfläche 31 auf, welche einer Anschlagvorrichtung 32 zu einem Zwischenteil 42 zugehört. Das Zwischenteil 42 stützt sich am der Gewindespindel 17 abgewandten Lagerteil des Wälzlagers 18 ab. Das auf der Gewindespindel 17 sitzende Lagerteil des Wälzlagers 18 liegt an einer dem Sechskantkopf 30 abgewandten Schulter 33 der Gewindespindel 17 an. Auf einem zylindrischen Abschnitt 34 der Gewindespindel 17 ist axial verschieblich, jedoch mittels eines Stifteingriffes 35 undrehbar ein Kupplungsteil 36 gelagert. Abseitig zum Sechskantkopf 30 befindet sich zwischen dem Kupplungsteil 36 und dem Zylindergehäuseboden 5 eine Drehkupplung 37, welche gemäß Fig.2 verzahnt ausgebildet sein kann. Die Verzahnung der Drehkupplung 37 kann sägezahnartig, mit unterschiedlichen Flankensteigungen zu beiden Zahnseiten ausgeführt sein, derart, daß sie bei einer einen bestimmten Grenzwert überschreitenden Drehmomentbelastung durchratscht. Eine sich gegen den Flanschabschnitt 25 abstützende Feder 38 belastet das Kupplungsteil 36 in Verschieberichtung zum Schließen der Drehkupplung 37. Die Flankensteigung der Verzahnung der Drehkupplung 37 ist derart zu wählen, daß sie das von der Speicherfeder 9 auf die Gewindespindel 17 über das nach Fig. 2 wahlweise selbsthemmend oder nichtselbsthemmend ausbildbare Gewinde 19' ausübbare Drehmoment sicher aufnimmt, erst bei Auftreten eines zusätzlichen, willkürlich am Sechskantkopf 30 auszuübenden Drehmomentes durchratscht. Durch entsprechende Wahl der Flankenneigungen kann dabei weiterhin erreicht werden, daß das am Sechskantkopf 30 aufzubringende Drehmoment zum Durchratschen der Drehkupplung 37 unter Berücksichtigung der erwähnten Drehbelastung der Gewindespindel 17 durch die Speicherfeder 9 in beiden Drehrichtungen gleich hoch ist.

Abseitig zur Speicherfeder 9 ist das Zylinderteil 27 neben der Spiralfeder 26 mit einem Flansch 39 versehen, welcher einem Axiallager zugehört, das über eine Feder 41 gegen den Zylindergehäuseboden 5 abgestützt ist; das Axiallager 40 befindet sich somit zwischen der Spiralfeder 26 und dem Dichtring 28 und bewirkt vermittels der Feder 41 eine ständige Belastung der Gewindespindel 17 in Verschieberichtung gemäß Fig. 2 nach links, in Anlagerichtung des Zwischenteiles 42 und damit des Wälzlagers 18 an einem am Zylindergehäuseboden 5 befindlichem Anschlagring 43.

Im durch Druckmittelbeaufschlagung des Federspeicherkolbens 6 in Lösestellung gehaltenen Federspeicherbremszylinder 3 nehmen dessen Teile mit Ausnahme der Mutter 20 die aus Fig. 2 ersichtlichen Lagen ein, die Mutter 20 befindet sich nahe des Flansches 24 auf der Gewindespindel 17. Die Anschlagkupplung 22 ist geöffnet, die Anschlagvorrichtung 32 dagegen geschlossen und hält das Zwischenteil 42 in Abstand vom Anschlagring 43, über das Wälzlager 18 wird dabei die Gewindespindel 17 entgegen ihrer Belastung durch die Feder 41 in einer nach rechts verschobenen Endlage gehalten, in welcher durch axiale Anlage des Kupplungsteiles 36 am gewindespindelseitigen Lagerteil des Wälzlagers 18 die Drehkupplung 37 geöffnet gehalten ist.

Während druckmittelgesteuerter Brems- und Lösevorgängen verschiebt sich, wie zu Fig. 1 beschrieben, mit dem Federspeicherkolben 6 das Kolbenrohr 15, wobei das Anschlagteil 16 jedoch nicht zur Anlage an der Mutter 20 gelangt. Zu Bewegungsbeginn des Anschlagteiles 16 während Einbremsvorgängen verschiebt die Feder 41 die Gewindespindel 17 mitsamt dem Wälzlager 18 geringfügig nach links, bis das Zwischenteil 42 am Anschlagring 43 anliegt; die Drehkupplung 37 wird dabei geschlossen. Bei der nachfolgenden Linksbewegung des Anschlagteiles 16 öffnet sich die Anschlagvorrichtung 32. Bei Rückkehr des Federspeicherkolbens 6 in die Löseendstellung spielen sich entsprechend umgekehrte Vorgänge ab. Diese Verschiebevorgänge der Gewindespindel 17 nehmen jedoch keinen weiteren Einfluß auf die druckmittelgesteuerten Brems- und Lösevorgänge des Federspeichers 3.

Befindet sich der Federspeicherkolben 6 durch mangelnde Druckmittelbeaufschlagung in einer Bremsstellung, so kann durch Drehen der Gewindespindel 17 vermittels des Sechskantkopfes 30 ein mechanisches Lösen bewirkt werden. Bei diesem Drehen ratscht durch entsprechendes verschieben des Kupplungsteiles 36 auf dem Abschnitt 34 entgegen der Kraft der Feder 38 die Drehkupplung 37 durch, die Mutter 20 wird auf der Gewindespindel 17 gemäß Fig.2 nach rechts verschraubt, gelangt alsbald unter Schließen der Anschlagkupplung 22 zur Anlage am Anschlagteil 16 und nimmt über dieses den Federspeicherkolben 6 mit. Die Lösestellung wird gerade bei Anlegen der Anschlagfläche 31 an das weiterhin am Anschlagring 43 anliegende Zwischenteil 42, also Schließen der Anschlagvorrichtung 32, erreicht. In dieser Lösestellung hält die unter der Kraft der Feder 38 geschlossene Drehkupplung 37 die Gewindespindel 17 derart drehfest, daß die Axialbelastung der Mutter 20 durch die Kraft der Speicherfeder 9 über das Gewinde 19' keine ungewollte Drehung der Gewindespindel 17 bewirken kann; bei Ausbildung des Gewindes 19' als nichtselbsthemmendes Gewinde ist diese drehfeste Halterung der Gewindespindel 17 vermittels der geschlossenen Drehkupplung 37 funktionsnotwendig, bei Ausbildung des Gewindes 19' als selbsthemmendes Gewinde sichert die geschlossene Drehkupplung 37 die Gewindespindel 17 zusätzlich zur Gewindereibung gegen ungewollte, beispielsweise durch Erschütterungen ansonsten mögliche Drehungen.

Durch wiederum unter Durchratschen der Drehkupplung 37 entgegen der Kraft der Feder 38 bewirkbares, willkürliches Rückdrehen der Gewindespindel 17 vermittels des am Sechskantkopf 30 anzusetzenden Drehwerkzeuges kann mechanisch ein Wiedereinbremsen bewirkt werden.

Wird der Federspeicherkolben 6 bei durch Betätigung der mechanischen Lösevorrichtung in der vorstehend beschriebenen Lösestellung befindlichem Federspeicherbremszylinder 3 mit einem Lösedruck beaufschlagt, so bewegt er sich um einen Schalthub nach rechts, wobei alle Teile in die in Fig. 2 dargestellten Lagen gelangen: über die geschlossene Anschlagvorrichtung 32 wird unter Abheben des Zwischenteiles 42 vom Anschlagring 43 das Wälzlager 18 mitsamt der Gewindespindel 17 entgegen der Kraft der Feder 41 geringfügig nach rechts verschoben, wobei durch Anlage des Kupplungsteiles 36 am Wälzlager 18 die Drehkupplung 37 geöffnet wird. Zugleich öffnet sich die Anschlagkupplung 22, wodurch die Mutter 20 von der Kraft der Feder 9 entlastet wird. Die Spiralfeder 26 vermag daher, bei geöffneter Drehkupplung 37 und entlasteter Mutter 20, die Gewindespindel 17 in Verschraubungsrichtung der Mutter 20 zum Flansch 24 hin zu drehen. Damit wird der Lösezustand des Federspeicherbremszylinders 3 bei Druckmittelbeaufschlagung mit einem Lösedruck wieder eingestellt.

In Abänderung zum vorstehend beschriebenen Ausführungsbeispiel kann die Drehkupplung 37 auch mit einer einfachen Schrägverzahnung oder unverzahnt, beispielsweise als Konuskupplung ausgebildet werden. Es ist dabei in Kauf zu nehmen, daß beim mechanischen Lösen und Wiedereinbremsen unterschiedlich hohe Drehmomente am Sechskantkopf 30 aufzubringen sind. Des weiteren ist es möglich, anstelle der Drehkupplung 37 eine schaltbare Freilaufvorrichtung vorzusehen.

In Abänderung vom in Fig. 2 dargestellten Ausführungsbeispiel kann unter Entfall der Feder 38 mit dem Kupplungsteil 36 die Drehkupplung 37 unmittelbar zwischen dem Zylindergehäuseboden 5 und der Gewindespindel 17 bzw. deren Flanschabschnitt 29 angeordnet werden, wenn das Durchratschen der Drehkupplung 37 durch deren entsprechende Ausgestaltung entgegen der die Drehkupplung 37 in Schließrichtung belastenden Speicherfeder 9 erfolgen kann. Auch die Feder 41 mit Axiallager 40 können bei dieser Ausführungsform entfallen, wenn bei in Ruhestellung befindlicher, mechanischer Lösevorrichtung eine geringe, freie Axialverschieblichkeit der Gewindespindel 17 in Kauf genommen wird.

Die drehfeste Axialführung der Mutter kann abweichend zur Längsschlitz 14/Ansatz 21-Führung in beliebiger, bekannter Weise, beispielsweise durch Sechskant-Innenprofil des Kolbenrohres 15, erfolgen.

In Abänderung von den dargestellten Ausführungsbeispielen ist es möglich, die Verschraubungsteile Gewindespindel 17 und Mutter 20 zu vertauschen, derart, daß die Mutter willkürlich drehbar und axial im wesentlichen unverschieblich gelagert ist, während die Gewindespindel undrehbar, aber durch einen Anschlag abfangbar axial verschieblich mit dem Federspeicherkolben 6 gekoppelt ist. Die eine Trieb- oder Spiralfeder 26 kann in mehrere Einzelfedern aufgegliedert sein.

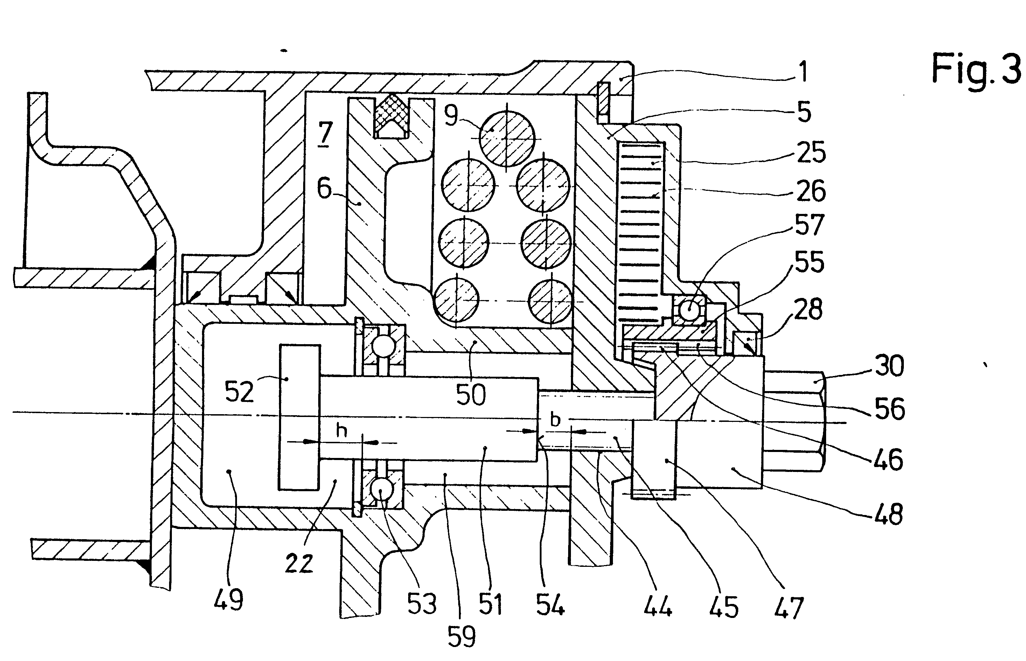

Beim Ausführungsbeispiel nach Fig. 3 ist in den Zylindergehäuseboden 5 zentrisch ein Muttergewinde 44 eingeschnitten, der wiederum drehfest gehaltene Zylindergehäuseboden 5 ist als zweites Verschraubungsteil ansehbar. Mit dem Muttergewinde 44 ist eine Gewindespindel 45 verschraubt, die außerhalb des Zylindergehäuses 1 einen eine Axialverzahnung 46 tragenden Abschnitt 47, einen einen zylindrischen Außenumfang aufweisenden Abschnitt 48 und an ihrem Ende den Sechskantkopf 30 trägt. Innerhalb des Zylindegehäuses 1 greift die Gewindespindel 45 in eine Ausnehmung 49 des sich in seiner dargestellten Löseendstellung über einen Zylinderansatz 50 gegen den Zylindergehäuseboden 5 abstützenden Federspeicherkolbens 6 ein. In der Ausnehmung 59 weist die Gewindespindel 45 einen verstärkten, zylindrischen Abschnitt 51 auf und endet mit einem radial auskragenden Anschlagteil 52. Am Federspeicherkolben 6 ist ein ringflanschartig in die Ausnehmung 49 ragendes Axiallager 53 gehalten, das bei maximal in das Zylindergehäuse 1 bis zum Anschlag des Abschnittes 47 an den Zylindergehäuseboden 5 eingeschraubter Gewindespindel 45 und am Zylindergehäuseboden 5 anliegendem Zylinderansatz 50 sich in einem Abstand h zum Anschlagteil 52 zwischen diesem und dem Zylindergehäuseboden 5 befindet; der Abstand h ist zumindest gleich groß dem maximalen, vom Federspeicherkolben 6 zurücklegbaren Hubweg. In der vorstehend beschriebenen Stellung befindet sich eine dem Abschnitt 51 begrenzende Flanschfläche 54 der Gewindespindel 45 in einem Abstand b zur Innenfläche des Zylindergehäusebodens 5, der kleiner als der Abstand h ist.

Im Bereich des Abschnittes 47 ist die Gewindespindel 45 von einem Ringkörper 55 umgeben, der mit einer Innenaxialverzahnung 56 in die Axialverzahnung 46 eingreift und somit undrehbar, aber axial verschieblich relativ zur Gewindespindel 45 geführt ist. Das Innenende der sich im Hohlraum 25 befindenden Trieb- oder Spiralfeder 26 ist am Außenumfang des mittels eines Lagers 57 drehbar am Zylindergehäusedeckel 5 gelagerten Ringkörpers 55 befestigt. Ein mit dem Abschnitt 48 zusammenwirkender, am Zylindergehäuseboden 5 gehaltener Dichtring 28 dichtet den Hohlraum 25 verschmutzungsdicht ab. Im übrigen entspricht die Anordnung nach Fig. 3 weitgehend derjenigen nach Fig. 1.

Wird, ausgehend von der in Fig. 3 gezeigten Löseendstellung des Federspeicherkolbens 6, der diesen beaufschlagende Beaufschlagungsraum 7 entleert, so verschiebt sich der Federspeicherkolben 6 unter der Kraft der Speicherfeder 9 gemäß Fig. 3 nach links, wobei das Axiallager 53 nicht zur Anlage am Anschlagteil 52 der sich in ihrer linken Endstellung befindlichen Gewindespindel 45 gelangen kann. Beim Wiederbeaufschlagen des Federspeicherkolbens 6 kehrt dieser in seine dargestellte Löseendsstellung zurück.

Wird während zumindest teilentleertem Beaufschlagungsraum 7 die mechanische Lösevorrichtung durch Drehen des Sechskantkopfes 30 vermittels eines geeigneten Werkzeuges betätigt, so schraubt sich die Gewindespindel 45 aus dem Zylindergehäuse 1 gemäß Fig. 3 nach rechts heraus. Das Anschlagteil 52 gelangt dabei alsbald zur Anlage am Axiallager 53, diese beiden Teile wirken wie die zur Fig. 1 beschriebene Anschlagkupplung 22 zusammen und mit der sich nach rechts verschraubenden Gewindespindel 45 wird der Federspeicherkolben 6 unter Spannen der Speicherfeder 9 mitgenommen. Nach Verschrauben um den Abstand b schlägt die Flanschfläche 54 am Zylindergehäuseboden 5 an, das Verschrauben ist damit beendet. Während des Verschraubungsvorganges dreht sich der Ringkörper 55 mit der Gewindespindel 45, wodurch die Spiralfeder 26 gespannt wird. Zugleich verschieben sich während der Verschraubung die Abschnitte 47 und 48 der Gewindespindel 45 relativ zum Ringkörper 55 und zum Dichtring 28 nach rechts, der Abschnitt 47 hebt sich bereits zu Verschraubungsbeginn von seiner Anlage am Zylindergehäuseboden 5 ab. Zu Verschraubungsende, beim Anliegen der Flanschfläche 54 an den Zylindergehäuseboden 5, weist der Zylinderansatz 50 noch einen geringen Abstand zum Zylindergehäuseboden 5 auf.

Wird nach dem geschilderten Verschrauben die Gewindespindel 30 freigegeben, so hält ihre Reibung zum Muttergewinde 44 infolge der durch die Speicherfeder 9 bewirkten Axialbelastung die Gewindespindel 45 entgegen dem durch die Spiralfeder 26 vermittels des Ringkörpers 55 auf die ausgeübten Drehmomente fest, es erfolgt kein selbsttätiges Zurückschrauben der Gewindespindel 45.

Ausgehend von der erreichten, mechanischen Lösestellung kann durch willkürliches Zurückschrauben der Gewindespindel 45 unter Überwindung der Reibung im Muttergewinde 44 ein mechanisches Wiedereinbremsen bewirkt werden. Wird nach Erreichen der mechanischen Lösestellung der Federspeicherkolben 6 wieder voll druckbeaufschlagt, so bewegt er sich um einen geringen Hubweg bis zum Anlegen des Zylinderansatzes 50 an den Zylindergehäuseboden 5 nach rechts, wobei sich das Axiallager 53 etwas vom Anschlagteil 52 nach rechts abhebt. Die Gewindespindel 45 wird hierbei von der Speicherfeder 9 entlastet, wodurch sich die Reibung der Gewindespindel 45 im Muttergewinde 44 wesentlich vermindert. Die Spiralfeder 46 kann nunmehr, infolge der verminderten Gewindespindelreibung, letztere vermittels des Ringkörpers 55, drehen, wobei sich die Gewindespindel 45 in das Zylindergehäuse 1 hineinschraubt, bis der Abschnitt 47 zur Anlage am Zylindergehäuseboden gelangt. Damit ist der in Fig. 3 dargestellte Zustand wieder erreicht.

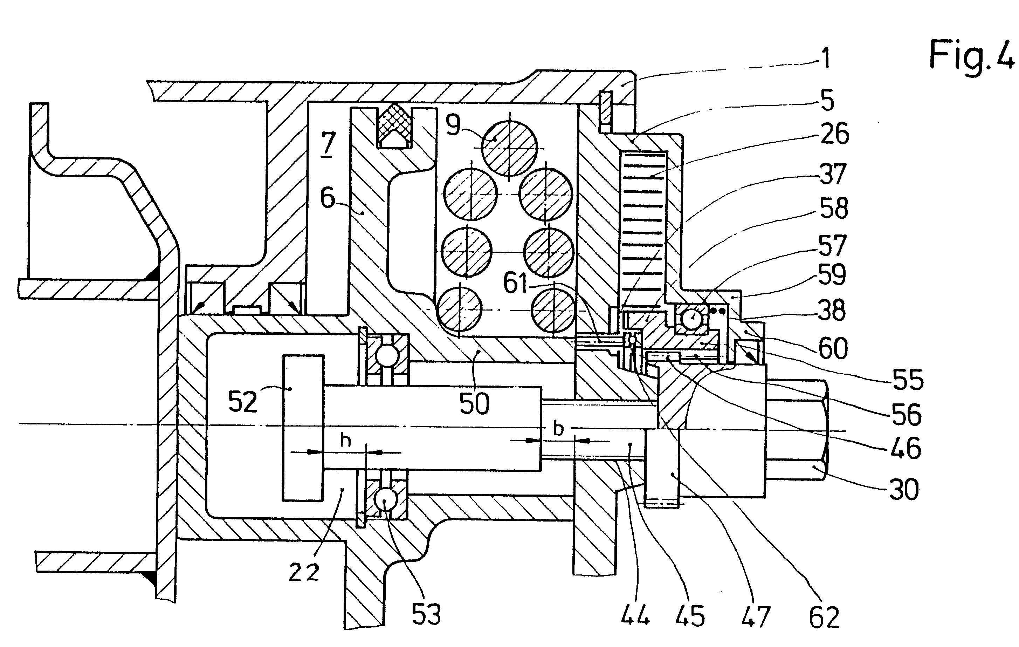

Die Lösevorrichtung nach Fig. 3 ist ebenso wie diejenige nach Fig. 1 besonders für eine selbsthemmende Gewindeausbildung an der Gewindespindel 45 und dem Muttergewinde 44 geeignet. Die nachfolgend zu beschreibende Ausführung einer Lösevorrichtung nach Fig. 4 ist demgegenüber entsprechend der Ausführung nach Fig. 2 für eine selbsthemmende oder nicht selbsthemmende Gewindeausbildung zwischen der Gewindespindel und dem mit dieser verschraubten Muttergewinde geeignet.

Gemäß Fig. 4 ist der Ringkörper 55 seitlich des axial unverschieblich auf ihm gehaltenen Lagers 57 starr mit einem Kupplungsteil 58 versehen, an dessen Außenumfang das Innenende der Trieb oder Spiralfeder 26 befestigt ist. An der dem Zylindergehäuseboden 5 zugewandten Stirnseite trägt das Kupplungsteil 58 eine Stirnverzahnung, welche zusammen mit einer komplementären Stirnverzahnung am Zylindergehäuseboden 5 die Drehkupplung 37 bildet. Der Außenring des Lagers 57 ist in einem innenzylindrischen Abschnitt 59 des Zylindergehäusebodens 5 um wenigstens den Schalthub der Drehkupplung 37 axial verschieblich gelagert. Die Feder 38 ist zwischen einem den Abschnitt 59 begrenzenden Wandabschnitt 60 des Zylindergehäusebodens 5 und dem Außenring des Lagers 57 eingespannt und belastet über das Lager 57 die Drehkupplung 37 in Schließrichtung Radial außerhalb des Muttergewindes 44 ist der Zylindergehäuseboden 5 in einem zur Gewindespindel 45 symmetrischen Teilkreis gleichmäßig verteilt von wenigstens zwei Bohrungen durchbrochen, in welchen Stößel 61 axial verschieblich geführt sind. Der Durchmesser des erwähnten Teilkreises entspricht dem Durchmesser des Zylinderansatzes 50, so daß die einander zugewandten Stirnflächen der Stößel 61 und des Zylinderansatzes 50 zur gegenseitigen Anlage gelangen können. Andererseits enden die Stößel 61 vor einem Axiallager 62, das am Ringkörper 55 gehalten ist. Die Länge der Stößel 61 ist um zumindest den Öffnungsschalthub der Drehkupplung 37 größer als die Wandstärke des Zylindergehäusebodens 5 im Bereich des Axiallagers 62. Im übrigen entspricht die Lösevorrichtung nach Fig. 4 derjenigen nach Fig. 3. Zum Ermöglichen eines Durchratschens kann die Drehkupplung 37 wie zu Fig. 2 beschrieben schräg- oder sägezahnartig verzahnt sein, es ist jedoch auch möglich, abweichend hierzu die Drehkupplung unverzahnt, beispielsweise als Konuskupplung auszubilden.

In der in Fig. 4 dargestellten Löseendstellung des Federspeicherkolbens 6 hält dessen Zylinderansatz 50 über die Stößel 61 und das Axiallager 62 den Ringkörper 55 mit dem Kupplungsteil 58 entgegen der Kraft der Feder 38 in einer Lage, in welcher die Drehkupplung 37 geöffnet ist. Die Gewindespindel 45 ist maximal bis zum Anschlag des Abschnittes 47 am Zylindergehäuseboden 5 in das Zylindergehäuse 1 eingeschraubt, so daß sich das Anschlagteil 52 im Abstand h links den Axiallager 51 befindet.

Die Brems- und Lösevorgänge erfolgen wie zu Fig. 3 beschrieben durch Druckabsenkung und Druckwiederaufbau im Beaufschlagungsraum 7. Sobald sich hierbei der Federspeicherkolben 6 nach links bewegt, vermag die Feder 38 über das Lager 57 den Ringkörper 55 mit dem Kupplungsteil 58 nach links zu verschieben, bis die Drehkupplung 37 geschlossen ist. Über das Axiallager 62 werden dabei auch die Stößel 61 mitgenommen, so daß deren linke Stirnseiten über die Innenfläche des Zylindergehäusebodens 5 vorstehen. Beim Rückkehren des Federspeicherkolbens 6 in die Löseendstellung drückt der Zylinderansatz 50 über die Stößel 61 alle erwähnten Teile wieder in die dargestellten Lagen bei geöffneter Drehkupplung 37 zurück.

Das mechanische Lösen erfolgt ebenfalls wie zu Fig. 3 beschrieben, wobei lediglich zusätzlich die von der Feder 38 in Schließrichtung belastete Drehkupplung 37 unter dem auf den Sechskantkopf 30 aufgebrachten Drehmoment durchratscht. Bei Freigabe des Sechskantkopfes 30, was in jeder beliebigen Brems- oder auch in der Lösestellung des Federspeicherkolbens 6 erfolgen kann, rastet die Drehkupplung 37 voll ein und hält über das Kupplungsteil 58, den Ringkörper 55, die Axialverzahnungen 46 und 56 und den Abschnitt 47 die Gewindespindel 47 undrehbar, so daß unter der Axialbelastung durch die Speicherfeder 9 und unter der zusätzlichen Drehbelastung durch die Spiralfeder 26 auch bei nicht selbsthemmender Gewindeausbildung kein ungewolltes Verschrauben erfolgen kann. Sobald jedoch der Beaufschlagungsraum 7 wieder voll druckbeaufschlagt wird, gelangt der Federspeicherkolben 6 in seine Löseendstellung, wobei er über die Stößel 61 die Drehkupplung 37 entgegen der Kraft der Feder 38 löst und zugleich durch Abheben das Axiallagers 53 vom Anschlagteil 52 die Gewindespindel 45 von der Axialbelastung durch die Speicherfeder 9 entlastet. Nunmehr reicht das von der Spiralfeder 26 ausgeübte Drehmoment aus, um die Gewindespindel 45 zu drehen und wieder vollständig in das Zylindergehäuse 1 in die in Fig. 4 dargestellte Lage einzuschrauben.

Die zu Fig. 1 und 2 beschriebenen Ausführungsvariationen sind auch für die Lösevorrichtungen nach Fig. 3 und 4 entsprechend möglich.

Weitere Variationsmöglichkeiten ergeben sich dadurch, daß das Muttergewinde 44 nicht unmittelbar in den Zylindergehäuseboden 5 eingeschnitten sein muß, sondern an einem gesonderten, mit dem Zylindergehäuseboden 5 fest verbundenen Teil angeordnet sein kann. Anstelle des Axiallagers 53 kann am Federspeicherkolben 6 ein fester Flanschring vorgesehen sein, wobei beim mechanischen Lösen zusätzliche Reibung zwischen diesem Flanschring und dem Anschlagteil 52 zu überwinden ist. Es kann jedoch auch das Anschlagteil 52 mit einem Axiallager ausgestattet werden. Schließlich ist es möglich, zwischen dem Ringkörper 55 und dem Kupplungsteil 58 eine relative Drehungen ausschließende, aber Axialverschiebungen ermöglichende Verbindung vorzusehen, derart, daß mittels der Stößel 61 nur das Kupplungsteil 58 entgegen der Kraft der Feder 38 verschieblich ist. Die Drehfeder 26 ist dabei am axial unverschieblich zu halternden Ringkörper 55 zu befestigen, so daß ihr Innenende keine Axialverschiebungen erfährt.

Die vorstehend beschriebenen Lösevorrichtungen sind offensichtlich auch zum Nachrüsten vorhandener, mit einfachen Gewindespindel-Lösevorrichtungen ausgestatteter Federspeicherbremszylinder gut geeignet: Hierbei ist lediglich der Zylinderboden mit der Gewindespindel auszutauschen.

## Bezugszeichenliste

1 Zylindergehäuse
2 Betriebsbremszylinder
3 Federspeicherbremszylinder
4 Sicherungsring
5 Zylindergehäuseboden
6 Federspeicherkolben
7 Beaufschlagungsraum
8 Raum
9 Speicherfeder
10 Gehäusezwischenwand
11 Kolbenrohr
12 Stößelansatz
13 Betriebsbremskolben
14 Längsschlitz
15 Kolbenrohr
16 Anschlagteil
17 Gewindespindel
18 Wälzlager
19, 19' Gewinde
20 Mutter
21 Ansatz
22 Anschlagkupplung
23 Schulter
24 Flansch
25 Hohlraum
26 Spiralfeder
27 Zylinderteil
28 Dichtring
29 Flanschabschnitt
30 Sechskantkopf
31 Anschlagfläche
32 Anschlagvorrichtung
33 Schalter
34 Abschnitt
35 Stifteingriff
36 Kupplungsteil
37 Drehkupplung
38 Feder
39 Flansch
40 Axiallager
41 Feder
42 Zwischenteil
43 Anschlagring
44 Muttergewinde
45 Gewindespindel
46 Axialverzahnung
47 Abschnitt
48 Abschnitt
49 Ausnehmung
50 Zylinderansatz
51 Abschnitt
52 Anschlagteil
53 Axiallager
54 Flanschfläche
55 Ringkörper
56 Innenaxialverzahnung
57 Lager
58 Kupplungsteil
59 Abschnitt
60 Wandabschnitt
61 Stößel
62 Axiallager

h Abstand
b Abstand

## Patentansprüche

1. Mechanische Lösevorrichtung für Federspeicherbremszylinder (3), insbesondere von Schienenfahrzeugen, dessen durch Druckmittelbeaufschlagung in eine Lösestellung bringbarer Federspeicherkolben (6) bei Ausfall des Lösedruckes mittels eines Schraubspindeltriebes zur Lösestellung bewegbar ist, wobei ein erstes Schraubelement (17; 45) des Schraubspindeltriebes willkürlich drehbar ist und mit einem weiteren Schraubelement (20; 44) verschraubt ist, welches undrehbar gehalten ist, wobei zwischen einem Schraubelement des Schraubspindeltriebes und dem Federspeicherkolben (6) mittel- oder unmittelbar eine in Bewegungsrichtung des letzteren zur Lösestellung wirksame Anschlagkupplung (22) vorgesehen ist, wobei der Federspeicherkolben (6) unter Druckmittelbeaufschlagung um einen zusätzlichen, ein Lösen der Anschlagkupplung (22) bewirkenden Schalthub in Richtung Lösestellung in eine Löseendstellung weiter bewegbar ist als mittels des Schraubspindeltriebes, und wobei wenigstens ein Federelement (26) vorgesehen ist, welches bei in Löseendstellung befindlichem Federspeicherkolben (6) das der Anschlagkupplung (22) zugeordnete Schraubelement elastisch in Verschraubrichtung entgegen der Richtung zur Lösestellung belastet, dadurch gekennzeichnet, daß der Schraubspindeltrieb eine der Stärke der Speicherfeder (9) zum Handlösen angepaßte, selbsthemmende oder nichtselbsthemmende Gewindesteigung aufweist, wobei bei nichtselbsthemmender Gewindesteigung dem drehbaren Schraubelement (17, 45) eine beim zusätzlichen Schalthub schaltbare Drehsperre (37) zugeordnet ist, und daß das Federelement als das erste Schraubelement (17; 45) in dessen Drehrichtung zum Verschrauben des der Anschlagkupplung (22) zugeordneten Schraubelementes (17; 20; 44; 45) entgegen der Richtung zur Lösestellung belastende Drehfeder (26) ausgebildet ist.

2. Lösevorrichtung nach Anspruch 1, dadurch gekennzeichnet, daß die Drehfeder als nahe des Zylindergehäusebodens (5) angeordnete Trieb- oder Spiralfeder (26) ausgebildet ist.

3. Lösevorrichtung nach Anspruch 2, dadurch gekennzeichnet, daß die Trieb- oder Spiralfeder (26) in einem ringscheibenartigen Hohlraum (25) des Zylindergehäusebodens (5) angeordnet ist, der lösbar mit dem übrigen Zylindergehäuse (1) verbunden ist.

4. Lösevorrichtung nach Anspruch 1, 2 oder 3, gekennzeichnet durch eine im geschlossenen Zustand das erste Schraubelement (17; 45) zumindest in durch das Federelement (26) bewirkbarer Drehrichtung sperrende Drehkupplung (37), welche vom Federspeicherkolben (6) gesteuert nur in desen Löseendstellung geöffnet ist.

5. Lösevorrichtung nach einem der vorstehenden Ansprüche, dadurch gekennzeichnet, daß das Gewinde der Schraubelemente (17, 20; 44, 45) selbthemmend ausgebildet ist.

6. Lösevorrichtung nach Anspruch 4 oder 5, gekennzeichnet durch ein zumindest in durch das Federelement (26) bewirkbarer Drehrichtung des ersten Schraubelementes (17; 45) mit diesem undrehbar verbundenes, aber axial verschiebliches Kupplungsteil (36, 58), das in axialer Verschieberichtung zum Schließen der zum Zylindergehäuse (1, 5) führenden Drehkupplung (37) von einer Feder (38) belastet und in entgegengesetzter Verschieberichtung über eine Anschlagvorrichtung (32; 61) vom Federspeicherkolben (6) verschiebbar ist.

7. Lösevorrichtung nach Anspruch 6, dadurch gekennzeichnet, daß die Drehkupplung (37) verzahnt, gegebenenfalls sägeverzahnt ausgebildet ist.

8. Lösevorrichtung nach einem oder mehreren der vorstehenden Ansprüche, dadurch gekennzeichnet, daß das erste Schraubelement als Gewindespindel (17; 45) und das zweite Schraubelement als Mutter (20; 44) ausgebildet ist.

9. Lösevorrichtung nach Anspruch 6 oder 7, dadurch gekennzeichnet, daß der Anschlagkupplung (22) ein am Federspeicherkolben (6) gehaltenes Anschlagteil (16) zugehört, das auf der der Anschlagkupplung (22) abgewandten Seite eine der Anschlagvorrichtung (32) zugehörende Anschlagfläche (31) aufweist.

10. Lösevorrichtung nach einem oder mehreren der vorstehenden Ansprüche, dadurch gekennzeichnet, daß das erste Schraubelement (17) drehbar und höchstens um einen Schalthub axial verschiebbar am Zylindergehäuse (1) gelagert ist, daß das zweite Schraubelement (20) axial verschieblich und undrehbar am Federspeicherkolben (6) gehalten ist, daß die Anschlagkupplung (22) zwischen dem zweiten Schraubelement (20) und dem Federspeicherkolben (6) vorgesehen ist, und daß die Drehfeder (26) das erste Schraubelement (17) in Drehrichtung zum Verschrauben des zweiten Schraubelementes (20) entgegen der Richtung zur Lösestellung belastet (Fig. 1 und 2).

11. Lösevorrichtung nach einem oder mehreren der Ansprüche 1 - 8, dadurch gekennzeichnet, daß das zweite Schraubelement (44) vom Zylindergehäuseboden (5) oder einem fest mit diesem verbundenen Teil gebildet ist und daß das erste Schraubelement (45) ein der gegebenenfalls ein Axiallager (53) aufweisenden Anschlagkupplung zum Federspeicherkolben (6) zugehörendes Anschlagteil (52) trägt (Fig. 3 und 4).

12. Lösevorrichtung nach Anspruch 10, dadurch gekennzeichnet, daß das erste Schraubelement (45) relativ undrehbar, aber axial verschieblich mit einem Ringkörper (55) gekuppelt ist, der höchstens um einen Schalthub axial verschieblich und drehbar im Zylindergehäuse (1), gegebenenfalls dem Zylindergehäuseboden (5), gelagert ist und an welchem das schraubspindeltriebseitig Ende der Drehfeder (26) angreift.

13. Lösevorrichtung nach Anspruch 6 oder 7 und 10, 11 oder 12, dadurch gekennzeichnet, daß der Ringkörper (55) das Kupplungsteil (58) trägt und daß die Anschllagvorrichtung den Zylindergehäuseboden (5) durchsetzende Stößel (61) umfaßt, die einerseits an den Federspeicherkolben (6) und andererseits an den Ringkörper (55) anlegbar sind.

14. Lösevorrichtung nach Anspruch 13, dadurch gekennzeichnet, daß zwischen den Stößeln (61) und dem Ringkörper (55) ein Axiallager (62) eingeordnet ist.

## Claims

1. Mechanical release device for spring-loaded brake cylinders (3), in particular of rail vehicles, whose pring-loaded piston (6), which can be brought into a release position by the application of a pressure medium, an be moved by means of a screw spindle drive to the release position when the release pressure fails, where a first screw element (17; 45) of the screw spindle drive can be rotated if desired and is screwed into a further screw element (20; 44), which is mounted against rotation, where between a screw element of the screw spindle drive and the spring-loaded piston (6) there is provided directly or indirectly a stop coupling (22) which is operative in the direction of movement of the latter to the release position, where, by the action of a pressure medium, the spring-loaded piston (6) can be moved further by an additional switching stroke in the direction of the release position into a final release position, causing release of the stop coupling (22), than by means of the screw spindle drive, and where at least one spring element (26) is provided which, when the spring-loaded piston (6) is located in the final release position, resiliently loads the screw element associated with the stop coupling (22) in the screwing direction away from the release position, characterised in that the screw spindle drive has a self-locking or non-self-locking thread pitch which is adapted to the strength of the preloaded spring (9) for hand release, where in the case of a non-self-locking thread pitch, a swivel stop (37), which can be operated during the additional switching stroke, is associated with the rotatable screw element (17; 45), and in that the spring element is constructed as a torsion spring (26) loading the first screw element (17;

45) in its direction of rotation for screwing the screw element (17; 20; 44; 45) associated with the stop coupling (22) away from the release position.

2. Release device according to claim 1, characterised in that the torsion spring is constructed as a mainspring or a spiral spring (26) arranged near the cylinder housing base (5).

3. Release device according to claim 2, characterised in that the mainspring or spiral spring (26) is arranged in an annular disc-shaped cavity (25) of the cylinder housing base (5), which is releasably connected to the rest of the cylinder housing (1).

4. Release device according to claim 1, 2 or 3, characterised by a swivel coupling (37) which, in its closed state, blocks the first screw element (17; 45) at least in the direction of rotation which can be effected by the spring element (26), and which is controlled by the spring-loaded piston (6) so as to be open only in the piston's final release position.

5. Release device according to one of the preceding claims, characterised in that the thread of the screw elements (17; 20; 44; 45) is self-locking.

6. Release device according to claim 4 or 5, characterised by a coupling part (36, 58) connected to the first screw element (17; 45) without allowing rotation at least in the direction of rotation of this screw element effected by the spring element (26), but allowing axial movement, the coupling part being loaded by a spring (38) in the direction of axial movement for closing the swivel coupling (37) leading to the cylinder housing (1, 5) and being movable in the opposite direction via a stop device (32; 61) by the spring-loaded piston (6).

7. Release device according to claim 6, characterised in that the swivel coupling (37) has a toothed, possibly saw-toothed construction.

8. Release device according to one or several of the preceding claims, characterised in that the first screw element is constructed as a threaded spindle (17; 45) and the second screw element as a nut (20; 44).

9. Release device according to claim 6 or 7, characterised in that a stop part (16) retained on the spring-loaded piston (6) belongs to the stop coupling (22), which stop part has a stop surface (31) belonging to the stop device (32) on the side remote from the stop coupling (22).

10. Release device according to one or several of the preceding claims, characterised in that the first screw element (17) is mounted on the cylinder housing (1) so as to rotate and be axially displaceable at the most by a switching stroke, in that the second screw element (20) is retained on the spring-loaded piston (6) allowing axial movement and preventing rotation, in that the stop coupling (22) is provided between the second screw element (20) and the spring-loaded piston (6), and in that the torsion spring (26) loads the first screw element (17) in the direction of rotation for screwing the second screw element (20) away from the release position (Figs. 1 and 2).

11. Release device according to one or several of claims 1 to 8, characterised in that the second screw element (44) is formed from the cylinder housing base (5) or a part fixed to it, and in that the first screw element (45) carries a stop part (52) associated with the stop coupling to the spring-loaded piston (6), which coupling may have an axial bearing (53) (Figs. 3 and 4).

12. Release device according to claim 10, characterised in that the first screw element (45) is coupled to an annular body (55) so as to permit relative rotation but allow axial movement, the body being mounted in the cylinder housing (1), possibly in the cylinder housing base (5) so as to allow rotation and be axially displaceable at the most by a switching stroke, and being engaged by the screw spindle drive end of the torsion spring (26).

13. Release device according to claim 6 or 7 and 10, 11 or 12, characterised in that the annular body (55) carries the coupling part (58) and in that the stop device includes push rods (61) penetrating the cylinder housing base (5), where the push rods can rest on the one hand on the spring-loaded piston (6) and on the other hand on the annular body (55).

14. Release device according to claim 13, characterised in that between the push rods (61) and the annular body (55) an axial bearing (62) is inserted.

**Revendications**

1. Dispositif mécanique de desserrage pour des cylindres de frein à ressort accumulateur (3) en particulier pour des véhicules sur rails, dans le piston à ressort accumulateur (6), qui est susceptible d'être amené par une charge en milieu sous pression dans une position de desserrage et qui est, dans le cas d'une défaillance de la pression de desserrage, susceptible d'être déplacé vers la position de desserrage par une transmission à broche filetée, du type dans lequel un premier élément de vissage (17 ; 45) de la transmission à broche fileté est susceptible d'être mis volontairement en rotation et d'être vissé avec un second élément de vissage (20 ; 44) qui est maintenu de façon à ne pas pouvoir tourner, dans lequel il est prévu entre un élément de vissage et la transmission à broche filetée et le piston à ressort accumulateur (6), indirectement ou directement, un accouplement de butées (22) agissant dans le sens du déplacement dudit piston (6) vers la position de desserrage, dans lequel le piston à ressort accumulateur (6), sous l'effet d'une charge en milieu sous pression, est susceptible d'être déplacé d'une course de commutation supplémentaire qu'avec la transmission à broche filetée, et cela dans le sens de la position de desserrage, dans une position d'extrémité de desserrage et provoquant l'ouverture de l'accouplement à butées (22), et dans lequel il est prévu au moins un élément de ressort (26) qui, lorsque le piston à ressort accumulateur (6) se trouve dans la position d'extrémité de desserrage, charge élastiquement dans le sens du vissage et dans le sens opposé vers la position de desserrage, l'élément de vissage associé à l'accouplement de butées, caractérisé par le fait que la transmission à broche filetée comporte un pas de filetage auto-bloquant ou non auto-bloquant, adapté à la force du ressort accumulateur (9) pour le vissage manuel, étant noté que dans le cas d'un pas de filetage non auto-bloquant, à l'élément de vissage tournant (17 ; 45) est associé un verrou anti-rotation (37) commutable lors de la course de commutation supplémentaire, et que l'élément de ressort est réalisé sous la forme d'un ressort de torsion qui charge le premier élément de vissage (17 ; 45) dans son sens de rotation correspondant au vissage de l'élément de vissage (17 ; 20 ; 44 ; 45) associé à l'accouplement de butée (22) dans le sens opposé à celui qui correspond à la position de desserrage.

2. Dispositif de desserrage selon la revendication 1, caractérisé par le fait que le ressort de torsion est réalisé sous la forme d'un ressort-moteur ou d'un ressort spiral (26), disposé près du fond du carter du cylindre (5).

3. Dispositif de desserrage selon la revendication 2, caractérisé par le fait que le ressort-moteur ou le ressort spiral (26) est disposé dans un espace (25), de la forme d'un anneau, du fond du carter du cylindre (5), qui est relié, de façon détachable avec le reste du carter de cylindre (1).

4. Dispositif de desserrage selon la revendication 1, 2 ou 3, caractérisé par un accouplement tournant (37) qui, à l'état fermé, bloque le premier élément de vissage (17 ; 45), au moins dans le sens de rotation provoqué par l'élément de ressort (26), ledit accouplement tournant étant ouvert sous la commande du piston à ressort accumulateur et seulement dans la position d'extrémité de desserrage.

5. Dispositif de desserrage selon l'une des revendications précédentes, caractérisé par le fait que le filetage de l'élément de vissage (17, 20 ; 44, 45) est réalisé de façon à présenter un caractère d'auto-blocage.

6. Dispositif de desserrage selon la revendication 4 ou 5, caractérisé par un élément d'accouplement (36, 58) qui est relié, sans pouvoir tourner, au moins dans le sens de rotation du premier élément de vissage (17 ; 45), qui peut être provoquée par l'élément de ressort (26), mais qui est susceptible d'être déplacé axialement, ledit élément d'accouplement est chargé par un ressort (38) dans le sens du déplacement axial, en vue de la fermeture de l'accouplement de rotation (37) qui mène au carter de cylindre (1, 5) alors que ledit élément d'accouplement est susceptible d'être déplacé dans le sens opposé, par le piston à ressort accumulateur (6), et par l'intermédiaire d'un dispositif à butée (32 ; 61).

7. Dispositif de desserrage selon la revendication 6, caractérisé par le fait que l'accouplement tournant (37) est pourvu d'une denture, éventuellement d'une denture en dent de scie.

8. Dispositif de desserrage selon l'une ou plusieurs des revendications précédentes, caractérisé par le fait que le premier élément de vissage est réalisé sous la forme d'une broche filetée (17 ; 45) et le second élément de vissage est réalisé sous la forme d'un écran (20 ; 44).

9. Dispositif de desserrage selon la revendication 6 ou 7, caractérisé par le fait que l'accouplement de butée (22) appartient à un élément de butée (16) qui est porté par le piston à ressort accumulateur (6), lequel élément de butée comporte, sur le côté éloigné de l'accouplement de butée (22), une surface de butée (31) qui appartient au dispositif de butée (32).

10. Dispositif de desserrage selon une ou plusieurs des revendications précédentes, caractérisé par le fait que le premier élément de vissage (17) est monté à rotation sur le carter de cylindre (1) et au maximum déplaçable axialement d'une course de commutation, que le second élément de vissage (20) est porté par le piston à ressort accumulateur (6) de façon à pouvoir se déplacer axialement mais sans pouvoir tourner, que l'accouplement de butée (22) est prévu entre le second élément de vissage (20) et le piston à ressort accumulateur (6), et que le ressort de torsion (26) charge le premier élément de vissage (17) dans le sens de rotation pour le vissage du second élément de vissage (20), en sens opposé à celui de la position de desserrage (figures 1 et 2).

11. Dispositif de desserrage selon une ou plusieurs des revendications 1 - 8, caractérisé par le fait que le second élément de vissage (44) est formé par le fond du carter de cylindre (5) et par un élément qui est solidaire de ce dernier, et que le premier élément de vissage (45) porte un élément de butée (52) appartenant au piston à ressort accumulateur (6), la butée d'accouplement comportant éventuellement un palier axial (53) (Figures 3 et 4).

12. Dispositif de desserrage selon la revendication 10, caractérisé par le fait que le premier élément de vissage (45) est accouplé au corps annulaire (55) de façon à ne pas pouvoir tourner par rapport à lui, mais pouvant par contre être déplacé axialement avec ledit élément annulaire, lequel corps annulaire est monté dans le carter de cylindre (1), éventuellement dans le fond du carter de cylindre (5), de façon à pouvoir être déplacé axialement d'une course de commutation, sans pouvoir toutefois tourner, et qui est attaqué par l'extrémité du ressort de torsion (26), qui est située du côté de la transmission à broche filetée.

13. Dispositif de desserrage selon la revendication 6 ou 7 et 10, 11 ou 12, caractérisé par le fait que le corps annulaire (55) porte l'élément d'accouplement (58) et que le dispositif de butée comporte des poussoirs (61) qui traversent le fond du carter de cylindre (5), lesquels poussoirs sont, à leur tour, susceptible d'être appliqués d'une part contre le piston à ressort accumulateur (6), et d'autre part, contre le corps annulaire (55).

14. Dispositif de desserrage selon la revendication 13, caractérisé par le fait qu'entre les poussoirs (61) et le corps annulaire (55) est prévu un palier axial (62).

Fig.1

Fig. 2

Fig. 3

0 192 830

Fig.4

0 192 830